# EUROPEAN PATENT APPLICATION

(11) **EP 2 374 714 A2**
(43) Date of publication of application: **12.10.2011**
(21) Application number: 11161207.3
(22) Date of filing: 05.04.2011
(51) Int. Cl.: B64C 13/50

(54) **Distributed fly-by-wire system**

(30) Priority: 09.04.2010 US 322576 P; 16.03.2011 US 49718
(71) Applicant: Honeywell International, Inc., Morristown, New Jersey 07962-2245 (US)
(72) Inventor: Tomas, Jan, Morristown, NJ 07962-2245 (US); Zavisek, Michal, Morristown, NJ 07962-2245 (US); Horniak, Frantisek, Morristown, NJ 07962-2245 (US); Prichystalova, Pavla, Morristown, NJ 07962-2245 (US); Hynek, Pavel, Morristown, NJ 07962-2245 (US)
(74) Representative: Buckley, Guy Julian

(57) **Abstract**

A system (100) includes a plurality of fly-by-wire control units (110) to control flight control surfaces (405, 410, 415, 420, 425) of an airplane (200), wherein each control unit (110) is adapted to operate independently of other control units (110) and directly control an actuator (215) to control a control surface as a function of direct pilot control device input (430, 435).

## Description

### Related Application

This application claims priority to United States Provisional Application serial number 61/322,576 (entitled DISTRIBUTED FLY-BY-WIRE SYSTEM, filed April 9, 2010) which is incorporated herein by reference.

### Background

Fly-by-wire (FBW) systems are used to fly a plane by using one or more computers to receive user input, process the user input, and then control a flight surface of a plane by use of an actuator. Such systems replace prior cables or other devices that provided a direct physical connection between a user input and the flight surface.

Prior FBW systems usually include two different types of units - high level control units which provide advanced functionality (Digital units) and lower level units, which provide basic processing of pilot commands and receive commands from higher level units which are combined together with the pilot commands. Lower level units may be analog or digital hardware. Even if lower level units are digital, for civil airplanes, actuator closed loop control is done by analog hardware. Higher level units are connected with lower level units via some avionics bus (CAN, ARINC, etc.). Higher level units may also host maintenance controller and fault isolation system and communicate with other airplane systems (or a special unit may be allocated for communication with external systems) via other defined bus (ASCB, CAN, ARINC, etc.). To provide safety, buses are usually duplicated and monitored.

Current approaches to the distribution of FBW systems are based on distribution of functionality between higher level units and lower level units, but the main approach is still mostly based on master/slave arrangement of the system components.

### Summary

A system includes a plurality of fly-by-wire (FBW) control units to control flight control surfaces of an airplane, wherein each control unit is adapted to operate independently of other control units and directly control an actuator to control a control surface as a function of direct pilot control device input.

In various embodiments, a control unit can be directly integrated with a corresponding actuator or can be hosted separately from the actuator and be connected with the actuator via wires. Control units may be connected to the fly-by-wire bus which allows communication between any units. All units can operate even if the FBW bus is lost because direct pilot input command processing is independent on FBW bus data.

### Brief Description of the Drawings

FIG. 1 is a block diagram of a fly-by-wire system according to an example embodiment.

FIG. 2 is a block schematic diagram of a fly-by-wire system distributed on an airplane according to an example embodiment.

FIG. 3 is a block schematic diagram of a fly-by-wire system distributed on an airplane in a different manner according to an example embodiment.

FIG. 4 is a block schematic diagram of a fly-by-wire system showing roll control according to an example embodiment.

FIG. 5 is a block schematic diagram of a fly-by-wire system showing pitch control according to an example embodiment.

FIG. 6 is a block schematic diagram of a fly-by-wire system showing an alternative pitch control according to an example embodiment.

FIG. 7 is a block schematic diagram of a fly-by-wire system showing yaw control according to an example embodiment.

FIG. 8 is a block schematic diagram of a fly-by-wire system showing speedbrake functionality according to an example embodiment.

FIG. 9 is a block schematic diagram of a fly-by-wire system showing further speedbrake functionality according to an example embodiment.

FIG. 10 is a block schematic diagram of a fly-by-wire system showing heartbeat monitoring according to an example embodiment.

FIG. 11 is a block schematic diagram illustrating digital closed loop control for an actuator according to an example embodiment.

FIG. 12 is a block schematic diagram illustrating force fight mitigation according to an example embodiment.

FIG. 13 is a block schematic diagram of a digital control unit according to an example embodiment.

FIG. 14 is a table illustrating digital control unit functions according to an example embodiment.

FIG. 15 is a table illustrating top level software functions according to an example embodiment.

FIG. 16 is a block schematic diagram illustrating dual digital control lane IO functions according to an example embodiment.

FIG. 17 is a block schematic diagram illustrating bus wiring with units located in the fuselage according to an example embodiment.

FIG. 18 is a block schematic diagram illustrating bus wiring with units located close to corresponding actuators according to an example embodiment.

FIG. 19 is a block schematic diagram illustrating logical links with control units located in the fuselage according to an example embodiment.

FIG. 20 is a block schematic diagram illustrating logical links with control units located close to corresponding actuators according to an example embodiment.

FIG. 21 is a block schematic diagram of a fly-by-wire maintenance system showing fault detection, isolating, and reporting according to an example embodiment.

FIG. 22 is a block schematic diagram of a fly-by-wire maintenance system showing fault processing according to an example embodiment.

FIG. 23 is a block schematic diagram of a fly-by-wire maintenance system showing latching of detected faults according to an example embodiment.

FIG. 24 is a block diagram of a controller for a fly-by-wire system to implement functions and algorithms according to an example embodiment.

### Detailed Description

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, logical and electrical changes may be made without departing from the scope of the present invention. The following description of example embodiments is, therefore, not to be taken in a limited sense, and the scope of the present invention is defined by the appended claims.

The functions or algorithms described herein may be implemented in software or a combination of software and human implemented procedures in one embodiment. The software may consist of computer executable instructions stored on computer readable media such as memory or other type of storage devices. Further, such functions correspond to modules, which are software stored on a storage device, hardware, firmware or any combination thereof. Multiple functions may be performed in one or more modules as desired, and the embodiments described are merely examples. The software may be executed on a digital signal processor, ASIC, microprocessor, or other type of processor operating on a computer system, such as a personal computer, server or other computer system.

A distributed fly-by-wire (FBW) system is based on independent control units where each control unit is connected directly to a controlled dedicated actuator and to a corresponding pilot control device. Control unit can be physically integrated with the controlled actuator or be hosted separately from the controlled actuator. Control units receive user/pilot input and then execute algorithms to control an actuator to move a controlled surface. Each control unit executes all functions used for control of the dedicated actuator. The control units are connected to a FBW bus which facilitates communication between the control units and receives inputs from external systems to provide control laws specified by a customer.

Each control unit can operate independently of other units because each unit executes all required safety monitoring inside of the unit and receive pilot inputs independently on the FBW bus. Each control unit can still control its corresponding actuator with required safety even if the FBW bus has failed and no data from the FBW bus are available for the control unit. In this failure mode, a control unit processes direct pilot controller device inputs to control the actuator and provides all required safety monitoring without necessity of inputs from other units. In this failure mode, system performance may be reduced, but the system still provides minimal required airplane controllability.

### System functionality summary

In various embodiments, there are no higher level/lower level units in the system - there is no unit that controls other units. Each control unit controls a dedicated actuator. Each control unit may execute only software for the controlled dedicated actuator. Each control unit is directly connected with a pilot controller device. Each control unit is independent in the sense of monitoring and may include two independent HW cards corresponding to a command lane and a monitoring lane, to provide self monitoring independent on other units in the system

Each control unit is connected to the FBW bus to coordinate with other units and provides advanced control laws. Each control unit is able to operate even if the FBW bus is lost (functionality is reduced, but safety monitoring is not impacted) and system still provide minimal required airplane controllability. Each control unit includes Digital Closed Loop to control actuator.

The system is based on the idea that each control surface in an airplane may be controlled by a different set of control laws. For this reason it is possible to distribute functionality in the system not between higher level and lower level units but between units which are related to the different control surfaces and motion axes. This approach removes two layers of the control units. The system may be composed from digital units which may host different functionality based on the control surface to which units are related. These units will be independent because each unit will be tied just to one controlled primary surface. To increase safety, two or three units may be connected to one surface - if one unit fails, a spare unit will take control. Units which will control the same surface may operate in active-standby mode or in active-active mode. All units of the system will be digital hardware in one embodiment. The hardware design of each unit may be the same (or just minor differences related to connectors to external buses for units which may be selected for external communication). Software for units will differ - based on what surface is controlled by unit. Each unit will provide both functionality - the advanced functions and direct processing of pilot command. In addition, actuator closed loop may also be implemented in digital hardware.

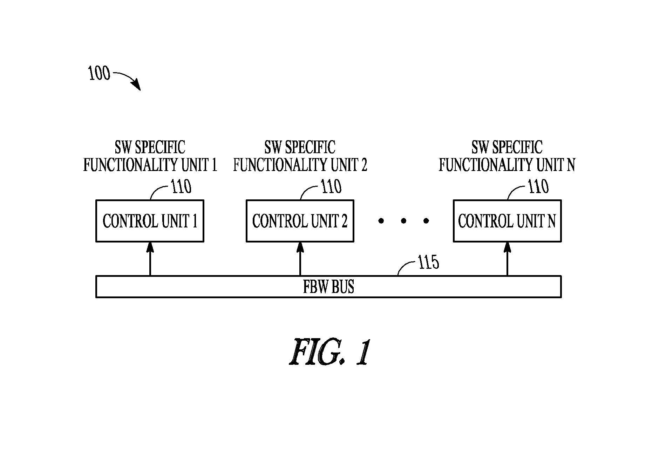

As illustrated in a high level block diagram of a fly-by-wire system 100 in FIG. 1, control units 110 are connected to one FBW bus 115 and may share any data which is required. In one embodiment, the bus is an open architecture bus to allow directly connecting other airplane system to the FBW bus 115 if necessary. If required, some control units 110 may be selected for communication with other airplane systems and also for maintenance and fault isolation coordination.

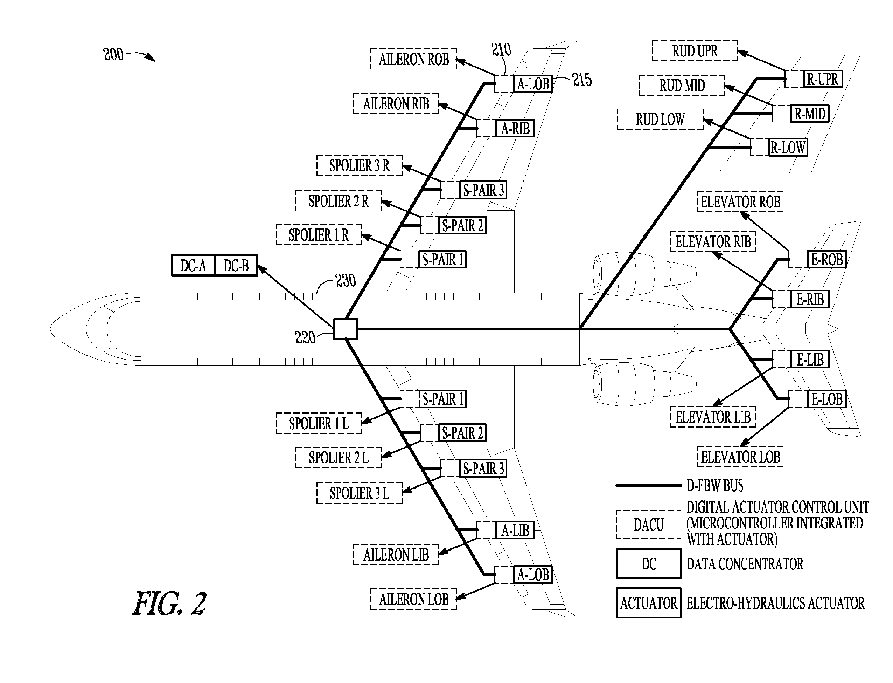

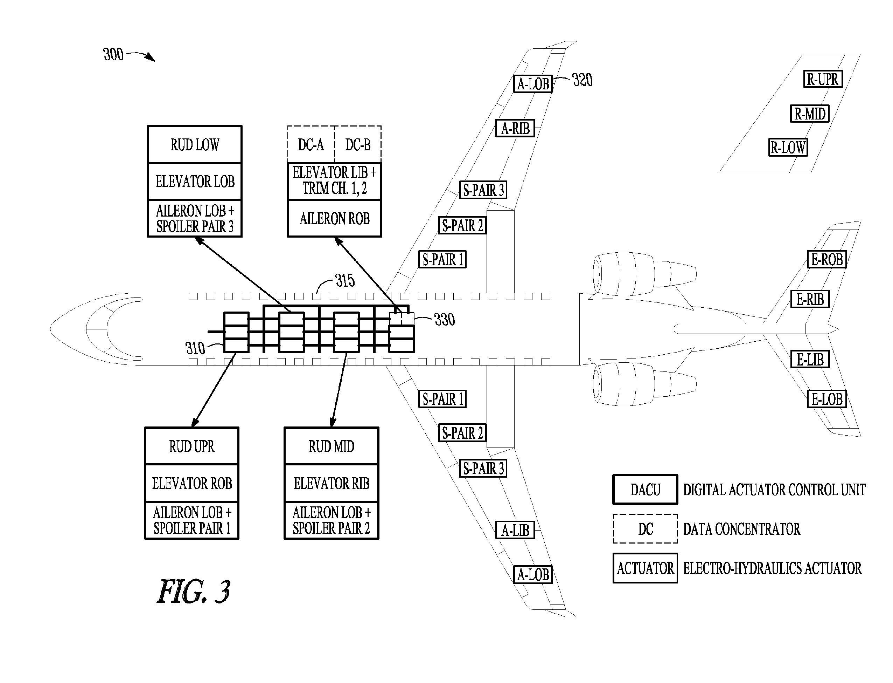

There are at least two different embodiments that distribute units around an airplane. A first embodiment illustrated as system 200 in FIG. 2 is to host control units 210 integrated as microcontrollers directly in actuators 215. A data concentrator 220 may be located centrally in a fuselage 230, or other location separate from the actuators. The actuators 215 are used to control aircraft flight control surfaces as shown in FIG. 2, such as ailerons, rudders, spoilers and elevators. In another embodiment illustrated as system 300 in FIG. 3, control units 310 are located in a fuselage 315 and connect with actuators 320 that control the flight surfaces via wired or wireless connections.

System 200 may provide real decentralization of units across the aircraft which may increase safety of airplane (for example in military aircrafts where some local areas of aircraft can be strongly damaged during a mission). The localization may also remove additional harness in a fuselage (for example cases for control cards, additional power supply wiring, etc.). This simplifies installation of the system 200 into the airplane as well as reduces weight of the system. In some embodiments, an actuator may have to be accessed when replacing a control unit integrated with the actuator.

System 300 may provide for simplification of maintenance when a control unit 310 is to be replaced. The length of wiring in comparison with prior systems will be very similar - the FBW bus will be of equal length to current buses which are used for communication between higher level control units, wiring to the actuators will be equivalent to the wiring from current lower level units to the actuators. The wiring in some embodiments may be even reduced in comparison with prior systems because no additional bus for communication between higher level units and lover level units is required. If an ARINC 664 bus is used and AFDX switches are correctly distributed over the airplane, the amount of wiring may be reduced even more.

In system 300 the secondary control surfaces (spoilers, horizontal stabilizer, etc.) may be controlled from a dedicated primary surface control unit.

Both embodiments may use one additional data concentrator dual lane unit 220, 330 for communication with external systems as well as for coordination of maintenance actions and consolidation of fault isolation. Note that this unit may not be necessary - open bus architecture may be used to allow other aircraft suppliers to connect directly to the FBW bus, read all required data as well as provide all required data without the need for any communication unit. One dual lane unit is shown at 330 and is dedicated for communication with external systems. The following paragraphs describe an embodiment corresponding to system 300. Note that due to the scalable manner of the system, changes between system 200 and system 300 may be small, and are mainly related to the secondary control surfaces. Because sections below describe the case when secondary control surfaces are controlled from dedicated DACUs for primary surfaces, most design decisions are valid for both system 200 and system 300.

Roll Control - the FBW system controls ailerons and spoilers roll assist to control roll. For each aileron actuator, there is a dedicated Digital Actuator Control Unit (DACU) to provide roll control for ailerons. Each aileron surface is controlled in one embodiment with two actuators. Aileron related DACUs may also control spoiler pairs to provide roll assist functionality. Each DACU can control more than one spoiler pair if required - for example in an airplane with four DACU for aileron actuators with seven spoiler pairs, three DACU units will control two spoiler pairs, one DACU will control one remaining spoiler pair. In system 200, one DACU may be dedicated for each spoiler actuator. In further embodiments, both approaches may be combined.

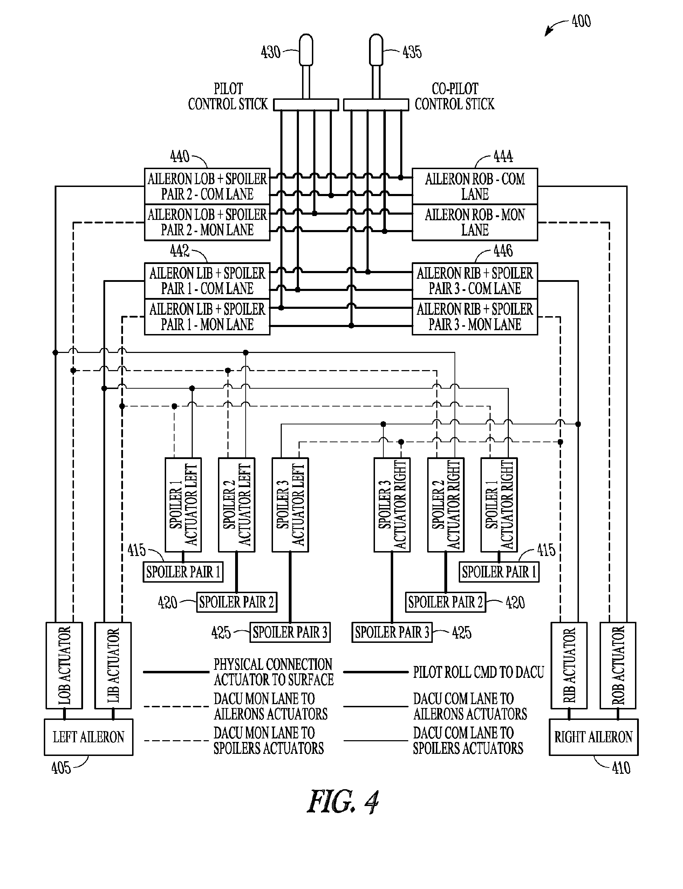

FIG. 4 is a block diagram illustrating roll control for a regional aircraft at 400. Roll is controlled with two aileron surfaces, left 405 and right 410, and three spoiler pairs 415, 420, 425 and passive sticks 430, 435 are used as pilot control devices. Four dedicated DACU (Digital Actuator Control Unit) 440, 442, 444, 446 will control roll. Three DACU 440, 442, and 446 for roll control will control also spoiler pairs (each DACU control one spoiler pair.) In addition to roll assist, dedicated DACUs which will control spoiler pairs will also provide speedbrake functionality and ground lift dump functionality as described further below.

Three possible pilot control devices for roll are considered - conventional wheel where pilot and co-pilot wheels are physically connected together and provides same inputs for DACUs, passive sticks 430, 435, where sticks can move independently and active sticks where sticks can move independently (but can move also together with no need of physical connection) and smart feedback based on airplane response may be provided to pilots.

Each pilot control device will be wired with all DACUs (one input to the COM lane of each DACU from pilot and co-pilot control device and one input to the MON lane of each DACU from pilot and co-pilot control device) to provide enough redundancy and safety for the critical command path.

DACU COM lane can be connected to two independent command sources (one pilot input, one copilot input) as well as each MON lane can be connected to two independent command sources. Use of two independent sources for each lane is used to support the passive stick and the active stick. If conventional wheel control device is used, then it may be enough to use just one input in each DACU lane.

Example of wiring of two passive sticks to four ailerons DACU is also shown in FIG. 4. The illustrated wiring allows usage of all three pilot control devices mentioned above. In one embodiment, each pilot control device can control all DACU. This means that loss of one control device for roll will not reduce performance of the entire system. DACU units selected for roll will provide the following basic functionality. Generate roll commands for an aileron surface based on various inputs (pilot command, airspeed, etc.) (COM Lane). Generate roll assist commands for spoilers based on various inputs (pilot command, airspeed, etc.) (COM Lane.) Augmentation of pilot commands per actual flight conditions (COM and MON Lane.) Monitoring of commands which are sent to actuator (COM and MON Lane.) Ability to disengage actuator if COM or MON lane detects safety critical error. Smart functionality per customer specific needs which is related to the roll (for example aileron droop.)

Pitch Control - System 300 controls elevators and horizontal stabilizer to control pitch. For each elevator actuator will be dedicated one Digital Actuator Control Unit (DACU) to provide pitch control for elevators. Each elevator surface will be controlled with two actuators. One of the elevator related DACUs will control also a horizontal stabilizer to provide trim functionality.

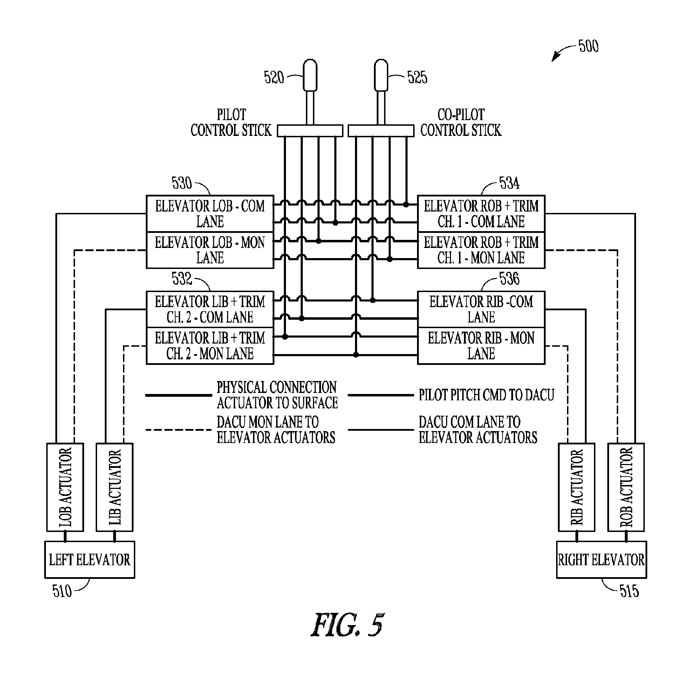

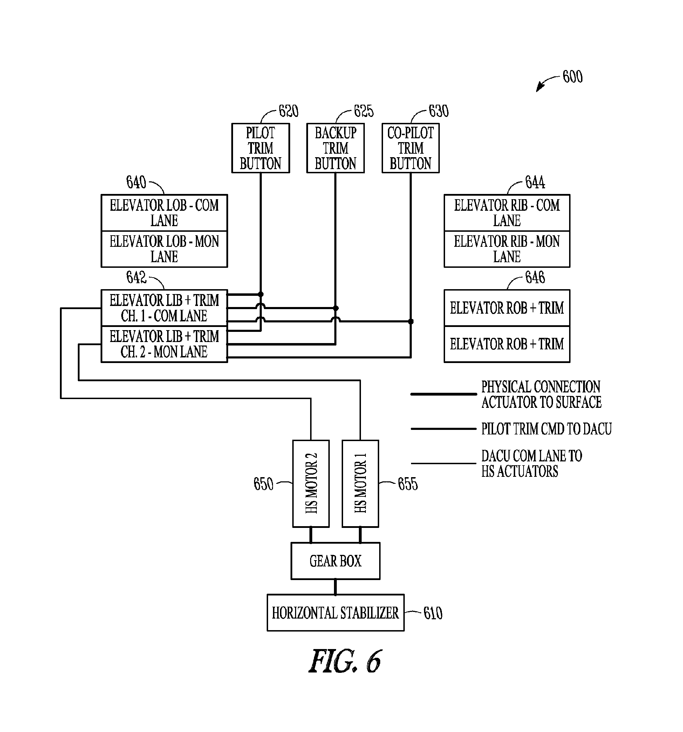

FIGs. 5 and 6 illustrate two embodiments, 500 and 600 for a regional aircraft where pitch is controlled with two elevator surfaces 510, 515 and by horizontal stabilizer 610 where passive sticks 520, 525 and trim buttons 620, 625, 630 are used as pilot control devices. The highest digit of the reference numbers generally identifies the first figure where corresponding elements are shown. Some elements, where they are identical, may have the same reference numbers in multiple figures. Four dedicated DACU (Digital Actuator Control Unit) 530, 532, 534, 536, 640, 642, 644, 646 will control pitch. One of elevator DACU 642 for elevator control will also control horizontal stabilizer 610 (each lane of the selected DACU will control one HS channel.) Three possible pilot control devices for pitch are considered - conventional column where pilot 520 and co-pilot 525 columns are physically connected together and provide the same inputs for DACUs, passive sticks where sticks can move independently and active sticks where sticks can move independently (but can move also together with no need of physical connection) and smart feedback based on airplane response may be provided to pilots.

Each pilot control device will be wired with all DACUs (one input to the COM lane of each DACU from pilot and co-pilot control device and one input to the MON lane of each DACU from pilot and co-pilot control device) to provide enough redundancy and safety for the critical command path.

It means that DACU COM lane can be connected to two independent command sources (one pilot input, one copilot input) as well as each MON lane can be connected to 2 independent command sources. Use of two independent sources for each lane is used to support the passive stick and the active stick. If a conventional wheel control device is used, then it may be enough to use just one input in each DACU lane.

Example of wiring of two passive sticks to four elevator DACU is provided in FIG. 5 (elevator control path). The illustrated wiring allows usage of all three pilot control devices for elevator control mentioned above - the only one pilot control device can control all DACU - it means that loss of one control device for roll will not reduce overall system performance.

To control pitch, trim switches 620, 625, 630 are used in the airplane. These switches can be wired as discrete signals (Trim up, Trim Down, No Trim) to selected DACU for pitch control. The DACU 642 dedicated for trim functionality can receive discrete inputs from all trim switches which are implemented in the airplane. Example wiring of three trim switches to one DACU 642, which is selected for trim, is illustrated in FIG. 6.

Both lanes of one DACU 642, which is dedicated for trim, can control HS motors 650, 655. It is assumed that dual lane DACU unit will meet probabilities to control trim without need to add one more DACU for HS. The advantage of this solution is that is not necessary to solve which DACU is actually in control of which HS motor - it is enough to ensure that 2 lanes inside of one DACU are aware of which is in control of the HS motors. This will simplify engagement logic for HS motors as well as prevent possible failure when two independent DACU will try to engage both HS motors in one time.

DACU units selected for pitch will provide following basic functionality. Generate pitch command for elevator surface based on various inputs (pilot command, airspeed, etc.) (COM Lane.) Generates trim command to horizontal stabilizer based on various inputs (pilot command, airspeed, etc.) (COM and MON Lane.) Augmentation of pilot commands per actual flight conditions (COM and MON Lane.) Monitoring of commands which are sent to actuator (COM and MON Lane.) Ability to disengage actuator if COM or MON lane detects safety critical error. Smart functionality per customer specific needs which is related to the pitch (for example bobweight).

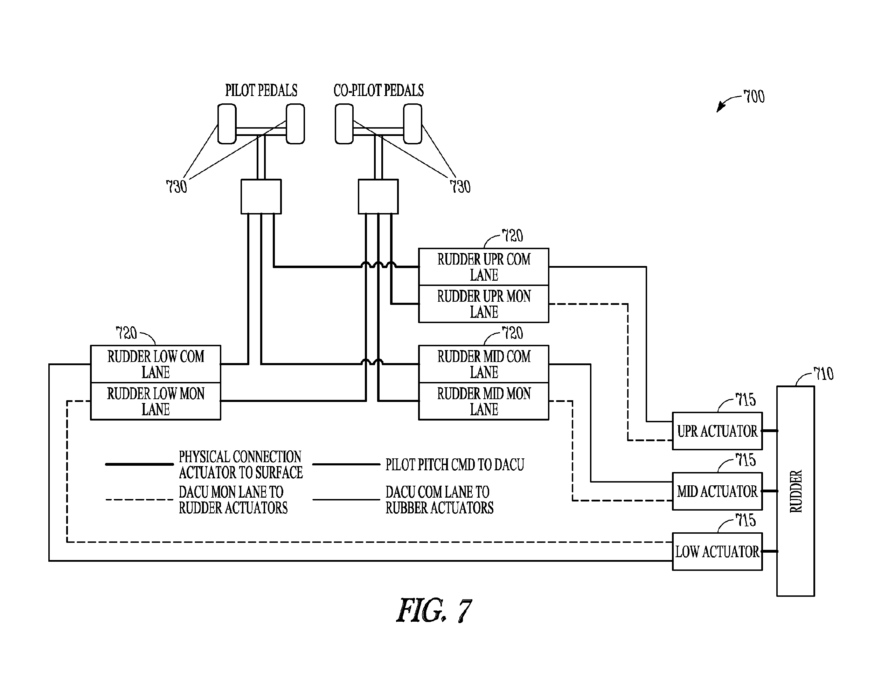

Yaw Control - System 300 will control a rudder 710 to control yaw as illustrated in FIG. 7 at 700. In one embodiment, each rudder actuator 715 will be dedicated one Digital Actuator Control Unit (DACU) 720 to provide yaw control for rudder. A rudder surface will be controlled with two or three actuators (depends how many independent actuators are required to meet rudder safety requirements).

FIG. 7 illustrates embodiment 700 for regional aircraft where yaw is controlled with one rudder surface and conventional pedals 730 are used as pilot control devices.

Pilot and Copilot pedals 730 which are physically connected together were considered as control device for yaw. It is assumed that pilot and copilot pedals cannot be disconnected and move independently - for this reason it is considered sufficient to wire one input from pilot to COM lane of DACU units dedicated for rudder and one copilot input to MON lane. It means that two independent signals for pilot commands (one from pilot pedals one from copilot pedals) will be available in each DACU for rudder control. COM and MON lane inputs will be monitored to in DACU software to provide required safety and redundancy.

If some other control device is used for rudder, DACU unit support connection of pilot and copilot control device to both COM and MON lane of each DACU dedicated for rudder control to adopt different requirements for various control devices.

Example of wiring of pilot's and copilot's pedals to 3 rudder DACU units is illustrated in FIG. 7.

DACU units selected for yaw will provide the following basic functionality. Generate yaw command for rudder surface based on various inputs (pilot command, airspeed, etc.) (COM Lane.) Augmentation of pilot commands per actual flight conditions (COM and MON Lane.) Monitoring of commands which are sent to actuator (COM and MON Lane.) Ability to disengage actuator if COM or MON lane detects safety critical error. Smart functionality per customer specific needs which is related to the yaw (for example yaw damper.)

Spoilers Control - additional spoilers functionality, which is often used, include speedbrake and ground lift dump function. Spoiler pairs may be controlled from aileron DACU units. (If aileron functionality is not required by a customer, spoiler control may be provided by elevator or rudder DACU units or additional DACU units may be dedicated just for spoiler control).

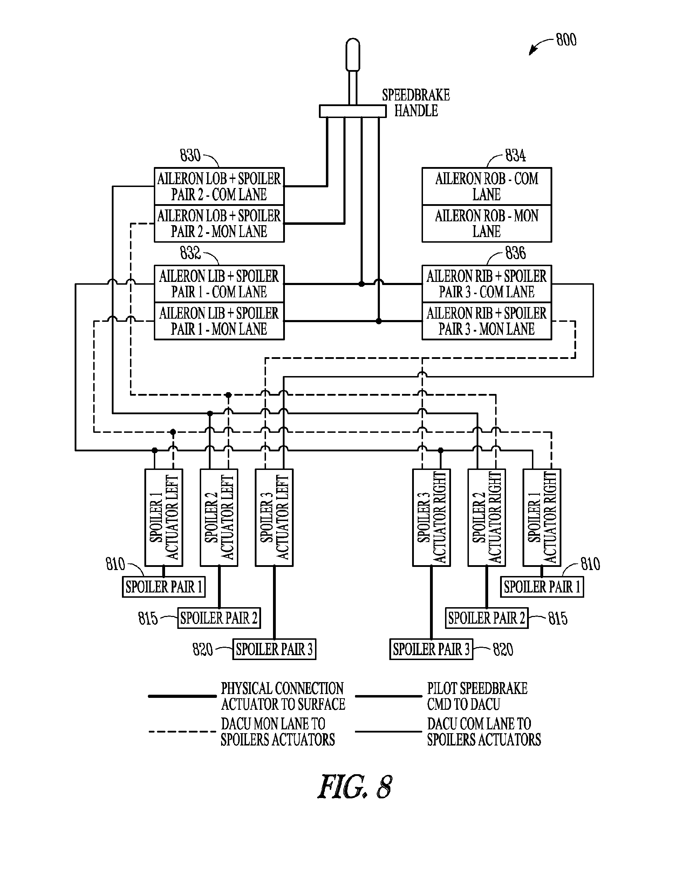

FIG. 8 at 800 shows an example of a regional airplane where are three spoiler pairs 810, 815, 820 are used to provide speedbrake functionality via three of four shown DACU units 830, 832, 834, 836. Roll assist usage of spoilers may also be provided as described below.

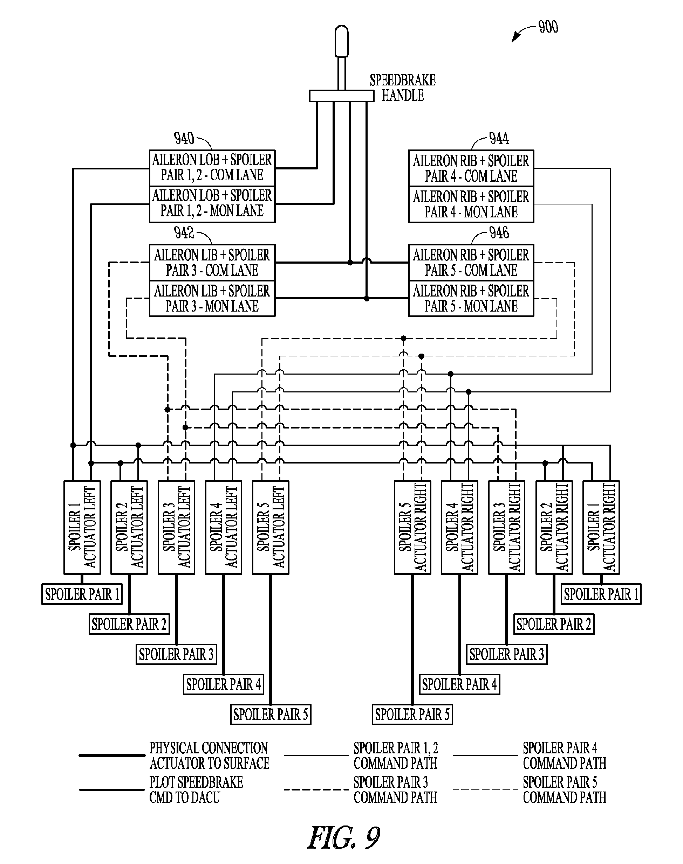

FIG. 9 at 900 illustrates scalability of the platform, showing how five spoiler pairs 910, 915, 920, 925, 930 can be controlled by four DACU units 940, 942, 944, 946. In system 200, each spoiler actuator may be controlled by an independent DACU unit, or a combination of approaches from system 200 and 300 may be used.

Each DACU unit used for spoiler control may control one or more spoilers pairs - the amount of spoilers pairs controlled by one DACU unit will be driven by the number of DACU dedicated for spoiler control and by the number of controlled spoiler pairs. For example, if three DACU units will be dedicated for spoiler control and seven spoiler pairs will be on the airplane, then two DACU units will control two spoiler pairs and the fourth DACU unit will control three spoiler pairs. A minimal number of DACU units for control of all spoiler pairs will be dependent on FHA for spoilers. (For example if uncommanded deployment of three spoiler pairs is catastrophic failure, then maximal acceptable number of spoiler pairs controlled by one DACU cannot exceed two to ensure that failure of one DACU unit will not leads to catastrophic event.)

In addition to roll assist, DACU units dedicated for spoiler control will provide the following functionality for spoilers. Speedbrake command from pilot to spoilers (COM Lane.) Augmentation of pilot speedbrake commands per actual flight conditions (COM and MON Lane.) Monitoring of commands which are sent to actuator (COM and MON Lane.) Ability to disengage actuator if COM or MON lane detects safety critical error. Smart functionality per customer specific needs which is related to the spoilers (for example ground lift dump.)

Trim Control - Trim control may be supported by one Horizontal stabilizer which may be controlled via two electrical motors which are connected to one shaft through a gearbox. To ensure safety, in one embodiment only one motor is active at a time to prevent possible mechanical damage of gearbox. To ensure high integrity of active-standby mode, in one embodiment only one DACU controls the motors. Each lane of the selected DACU unit will be able to control one electrical motor for the horizontal stabilizer. COM and MON Lanes will operate in Act-Standby mode. The DACU dedicated for trim will alternate active channel between lanes in required time period to support equable fatigue of HS motors.

The DACU will consume inputs from all trim switches to support manual pilot trim and will provide priority logic in the case that more trim inputs than one will be active in one time. The DACU will also provide smart trim functionality if required (for example automatic trim command based on changes of airplane configuration, high speed trim command, etc.)

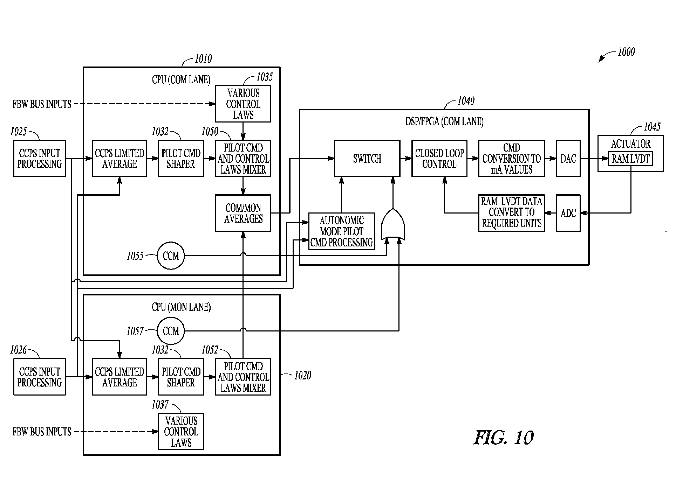

FIG. 10 is a block diagram of a single DACU 1000 command path. The DACU includes a digital closed loop implementation in a COM lane 1010 with command response monitoring with heartbeat monitoring of the COM lane DSP in a MON lane 1020. Each DACU receives inputs 1025 from the pilot control device in COM lane as well as in MON lane at 1026. The DACU provides basic pilot command processing 1030 and 1032 as well as additional control laws 1035, 1037. Final command is processed in digital closed loop 1040 which drives the actuator 1045.

The DACU unit is able to support three operational modes. Normal mode when data from FBW Bus are available, secondary mode when some control laws are disabled, and autonomic mode when DACU operates without the FBW bus data. In normal mode, all required control laws are provided and mixed with the pilot command. The normal mode operation expects that all data for the control laws are available and the system provides a full functionality.

In the secondary mode, the DACU disables some control laws but still provides part of the control laws and is able to communicate with other parts of the system via the FBW bus. In the normal mode as well as in the secondary mode, primary command path is used - this path includes a mixer 1050, 1052 of the pilot command with the control law inputs.

In the primary as well as in the secondary mode, the DACU compares commands between COM 1010 and MON 1020 lane (both lanes include identical monitor). If this monitor trips in COM lane or MON lane (primary path CCM 1055, 1057), the system will switch to the autonomic mode to provide just a basic pilot command path.

The DACU operates in an autonomic mode if the primary path CCM is tripped or if the DACU does not receive valid data from the FBW Bus. In the autonomic mode, the DACU provides the pilot command to the actuators with minimal processing. All control laws are disabled and only limited functionality is provided for some safety critical control laws (e.g. airspeed gain). The limited functionality of the critical control laws is based only on the inputs which are independent of the FBW bus (e.g. additional discrete inputs to DACU). The autonomic mode is fully hosted in DSP/FPGA and is CPU independent to provide autonomic mode also in the case that the CCM is tripped due to common CPU faults.

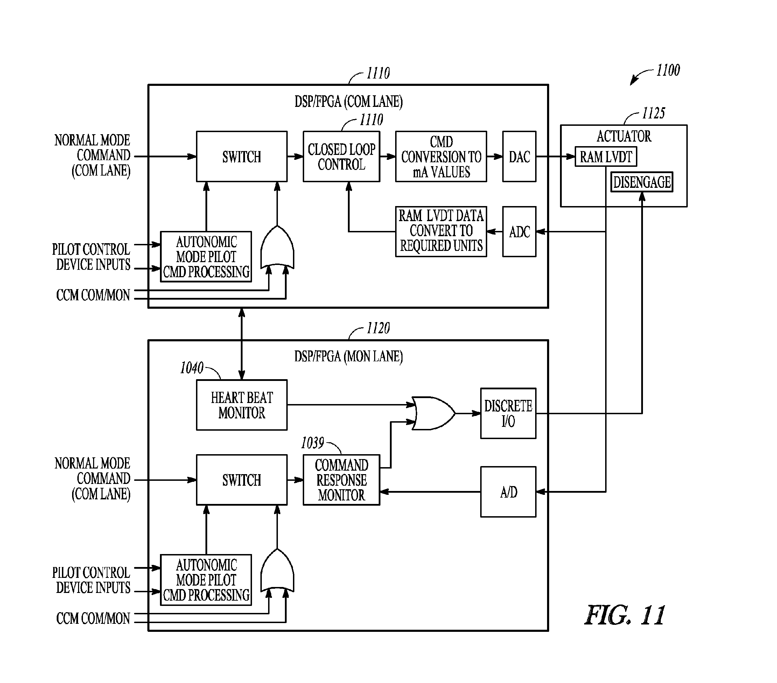

FIG. 11 is a block diagram illustrating a schematic of the digital closed loop implementation in the COM lane 1110 and closed loop monitoring in the MON lane 1120 at 1100. Command response monitoring with heart beat monitoring of COM lane DSP in MON lane 1120. Each DACU unit will provide a closed loop for dedicated actuator 1125. COM lane in each DACU will host DSP microcontroller or FPGA dedicated for actuator loop closing 1030. MON lane will host DSP microcontroller or FPGA which will provide a Command Response Monitor 1035 and a heart beat monitor 1040 and will be able to disengage the actuator 1125 in the case that a failure is detected.

The digital closed loop algorithm is not hosted on the main COM lane CPU but in a separate DSP microcontroller or FPGA because a high speed calculation of the closed loop is used to provide a stable control loop. The airplane actuators response time is usually in order of hundredths of second. To control the airplane actuator efficiently, the control loop is closed at a rate of thousandths of second. The main CPU in COM lane will be loaded by the calculation of all required control laws as well as monitors - this may leads to throughput issues if 1 kHz thread is required for the closed loop.

The DSP/FPGA in DACU COM Lane will receive calculated command (surface position or surface rate) from COM lane CPU and a feedback from actuator RAM LVDT. The RAM LVDT data will be converted from analog signal to digital and recalculated to the required units for closed loop control. The closed loop will be calculated (PI or PID algorithm may also be used) and calculated regulation will be converted to the required current and sent via q DAC to the actuator. If the DACU operates in autonomic mode, the DSP/FPGA will directly process the pilot inputs, independently of the CPU path.

The DSP/FPGA in DACU MON Lane will receive the calculated command (surface position or surface rate) from the COM lane CPU and the feedback from actuator RAM LVDT. The RAM LVDT data will be converted from analog signal to digital and fed to the command comparison monitor to verify that COM lane commands the actuator properly and the actuator responses correctly to the command. If an error is detected, the DSP/FPGA in MON lane will produce discrete to disengage the actuator. In addition to the Command response monitor, the MON lane DSP/FPGA will also host a heart beat monitor to provide additional safety check of the DSP/FPGA on the critical command path.

Actuation Mode Logic - It is expected that each primary surface is controlled with at least two actuators for regional jests. Some embodiments will support Active-Active mode, corresponding to both actuators being active, as a normal mode of actuation for primary surfaces. Active-Standby mode of actuation will be supported as a normal or secondary mode.

Active-Active Mode - In Active-Active mode, each of the surface actuators are driven by commands from separate DACU units originating from pilot/copilot position inputs or autopilot commands. The Active-Active mode design utilizes consideration of force fight (FF) and fatigue mitigation. Some embodiments will support two approaches to force fight mitigation - system with or without force equalization, based on customer needs.

Active-Active Mode with Force Equalization - Force equalization computations within the system will modify the separate actuator commands controlling the surface in order to minimize the force fight between cooperating actuators.

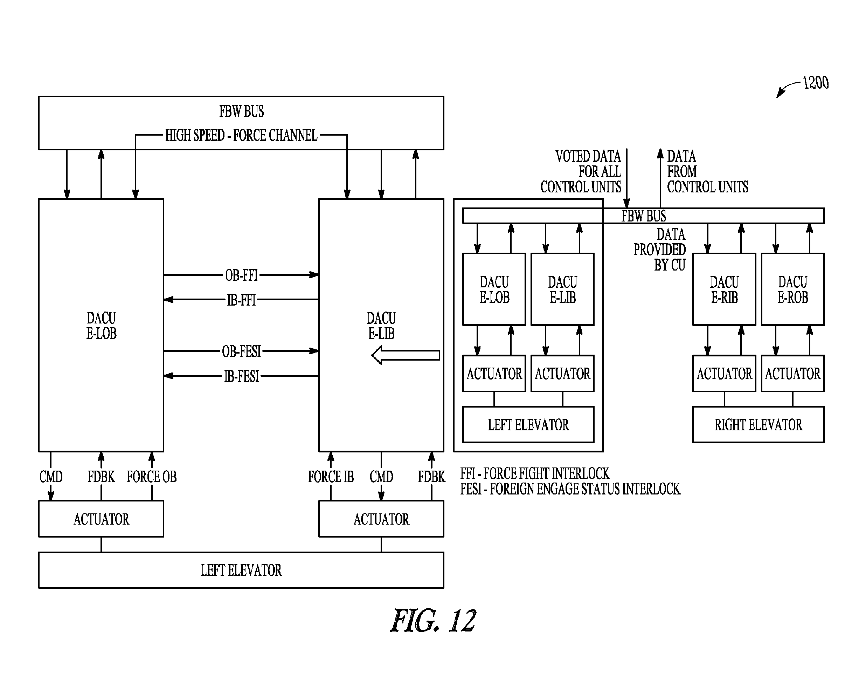

The force fight mitigation algorithm may be based on force signals provided by actuators via Actuation Data Bus to local DACU and via FBW-Bus to foreign DACU. High speed channel on FBW-Bus between partner DACUs will be used to be able to mitigate force fight with acceptable response time as illustrated in FIG. 12 at 1200.

Local force fight capabilities will be monitored for three events, global force fight authority exceedence (force fight Authority Monitor), local force fight resources availability loss (force fight Capability Monitor), maximum fatigue level exceedence (Fatigue Monitor)

When FF authority is exceeded system will switch to Active-Standby mode. Force Fight Authority (FFA) will be based on individual aircraft performance and design requirements. When FF resources become locally unavailable, DACU will indicate this fact to the foreign DACU via Force Fight Interlock discrete (FFI).

To be able maintain FF equalization even with single DACU capable (resource-wise), the authority of force equalization algorithm may be variable. When all resources are available in both DACUs, the authority of FF algorithm will be equal to 1/2 of FFA in both DACUs. Once one of the units loses its FF capability, the other will increase it to FFA.

The system will switch to Active-Standby mode in case of loss of FF capability in both DACUs. When maximum fatigue level is exceeded, the system will indicate maintenance action and set No Dispatch indication.

Active-Active Mode without Force Equalization - Mounting, actuators and rate limits will be designed such that the system will be able to absorb common operational force fight levels. A system will only monitor forces and fatigue with authority to switch to Active-Standby mode in case of excessive force fight and to indicate maintenance action and set No Dispatch indication in case of over-limit fatigue accumulation.

Active-Active-Active Mode - The D-FBW platform will also support a three-actuator configuration. The logic may be derived from the Active-Active embodiment. The deviation from Active-Active logic occurs in secondary mode behavior and force fight treatment. In a normal Active-Active-Active mode for the three actuator configuration, the system performs active force equalization. In degraded normal mode with an Active-Active-Standby configuration, a passive approach may be used. Another aspect of a three-actuator configuration will be further increased need of integrity of force data transfer (High Speed Force Channel). Other aspects of Active-Active-Active mode may be identical with Active-Active mode.

Active-Standby Mode - One aspect of Active-Standby Mode is to engage logic covering engage priority handling between partner units. The DACU units will use pair of discrete units to be able to setup Active-Standby mode (Foreign Engage Status Interlock - FESI). In each DACU pair, one unit will have higher priority (Local Engage Priority - LEP, hardwired). When one or both units request transition to Active Standby mode, the engage logic will use the LEP and FESI to decide if it should stay engaged or should disengage and to indicate its status to foreign unit. In a three-unit configuration the behavior is similar - the peripheral units are wired together to create closed interlocked circle and the engage logic uses relative right and relative left interlocks to make the decision.

Other Considerations - Whole actuation logic and force fight solutions may be supported by standard analysis methodology, using/providing basic performance and design requirements, with special focus to maximum Force Fight Authority, maximum rates, and maximum transport delay of DACU-DACU communication (High Speed Force Channel) Actuator performance and mechanical construction.

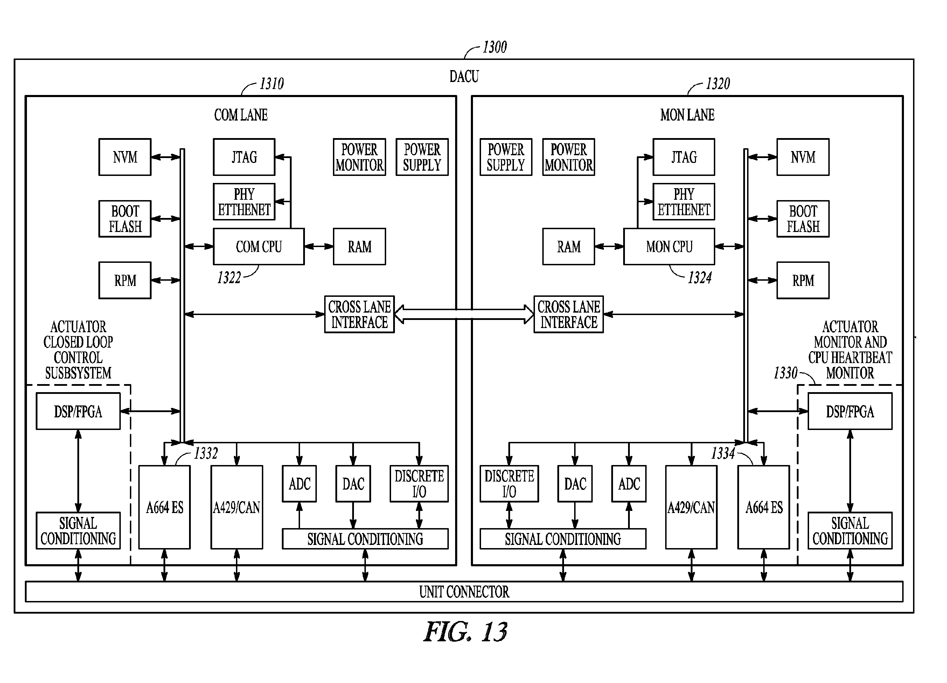

FIG. 13 is a top level block diagram of a DACU 1300. The D-FBW relies on a set of control units to provide the necessary computational resources and I/O capability. There are two types of units, Digital Actuator Control Unit and Data Concentrator unit. The hardware design of each unit is now described.

The DACU control unit 1300 fulfills the following main roles: Provide high integrity processing platform, Interface with the internal FBW bus, and Interface with the actuator.

In order to provide high integrity processing platform, the control unit 1300 is based on a dual dissimilar processing in a Command/Monitor arrangement. The unit contains two lanes COM 1310 and MON 1320, each with a different type of processor 1322 and 1324 respectively. The cross lane monitoring, implemented in software, will result in a fail passive system with respect to random or generic faults occurring in one of the lanes. Although, the monitoring is implemented in software, the hardware design provides support for the cross lane monitoring (i.e. cross lane communication and synchronization).

The D-FBW architecture eliminates the lower level control units that are, in the traditional FBW systems, used to interface with the actuators and implement the actuator innermost control loop. The control loop in the D-FBW system is implemented in software executing on a dedicated DSP processor in order to meet the rate requirements for the control loop implementation. Therefore, the COM and MON lane provide a dedicated DSP processor. In the COM lane, the DSP processor can host the actuator control loop. In the MON lane, the DSP processor can host the actuator and heartbeat monitors 1330. The control unit has to provide I/O capability to directly interface with the actuator, for command and feedback, in order to allow the implementation of the innermost control loop.

An FPGA device can be alternatively used in place of the DSP processor should the safety analysis show that the safety requirements cannot be met with a DSP processor.

An interface 1332, 1334 to the ARINC 664 network is provided in each lane, as well as other interfaces with appropriate signal conditioning.

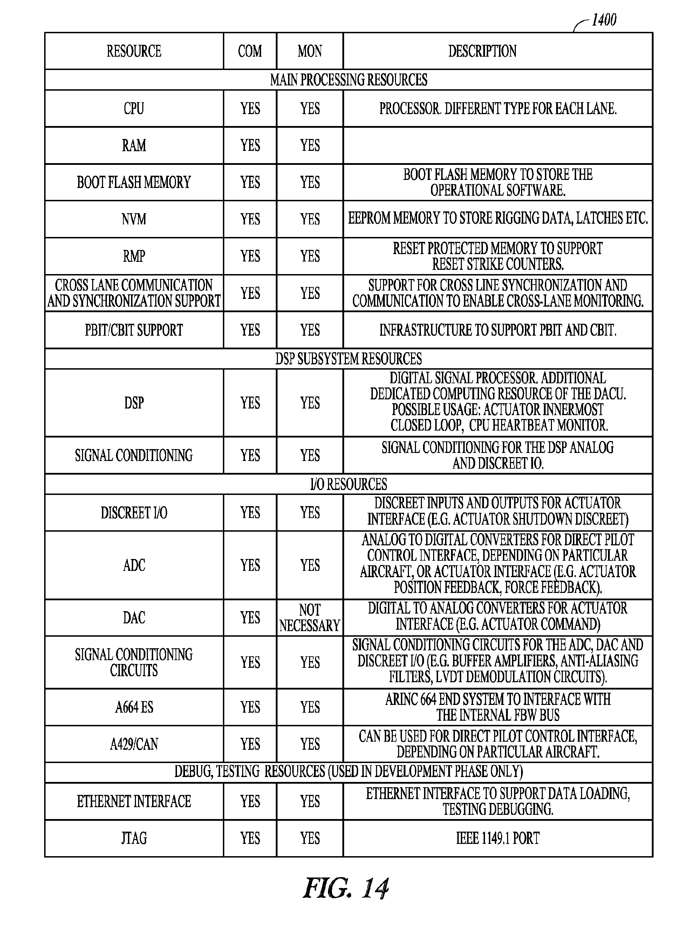

All control unit 1300 hardware resources are listed in a table 1400 in FIG. 14.

The DC unit functions primarily as a gateway between the aircraft data networks and the internal FBW bus (i.e. ARINC 664 data network). The DC unit contains two lanes to provide redundancy in the data management. However, the lanes are not operating in the Command/Monitor arrangement like the DACU unit.

Even though the operation of the DC unit is very much different from the DACU unit. It should be possible to use the same hardware and thus limit the number of different parts of the FBW system as well as to lower the hardware development cost. Some of the features of the DACU hardware would end up being unused or provisional in the DC unit.

In some embodiments, the two processor have a balanced performance. They support one convention for storing integers, preferably the big-endian convention. The unit board incorporates a wide variety of I/O hardware. Therefore the embedded controllers, which already incorporate some I/O features, are an interesting option for the D-FBW units, such as for example, the MCF547X or MPC86xx.

The units (i.e. DACU and DC unit) are hosting a number of different functions (e.g. I/O processing, maintenance functions, FBW function, input data voting etc). The software design relies on a real-time operating system to manage the computational resources for the functions. The real-time operating system in some embodiments may be DO-178B certified or certifiable and utilizes time and space partitioning. DEOS™ is being considered as a real-time operating system for the D-FBW.

The following sections describe a high level software design for each of the units. The design is described in terms of functions which encompass particular functionality. The functions can be implemented as one or more tasks executing at a particular rate.

The DACU unit software architecture consists of core software functions that are primarily responsible for interfacing with the unit I/O hardware, thus shielding the FBW, maintenance and aircraft specific functions from the complexity of the hardware interface. The input function is responsible for providing raw data to the FBW, maintenance and aircraft specific functions. The input data arrive into the unit asynchronously. Therefore, concentrating the raw data acquisition into one function helps to ensure that all the consumers of the data have a consistent sample for a particular period. The output function is responsible for performing cross-lane monitoring of the unit output data and providing the data to the unit output hardware.

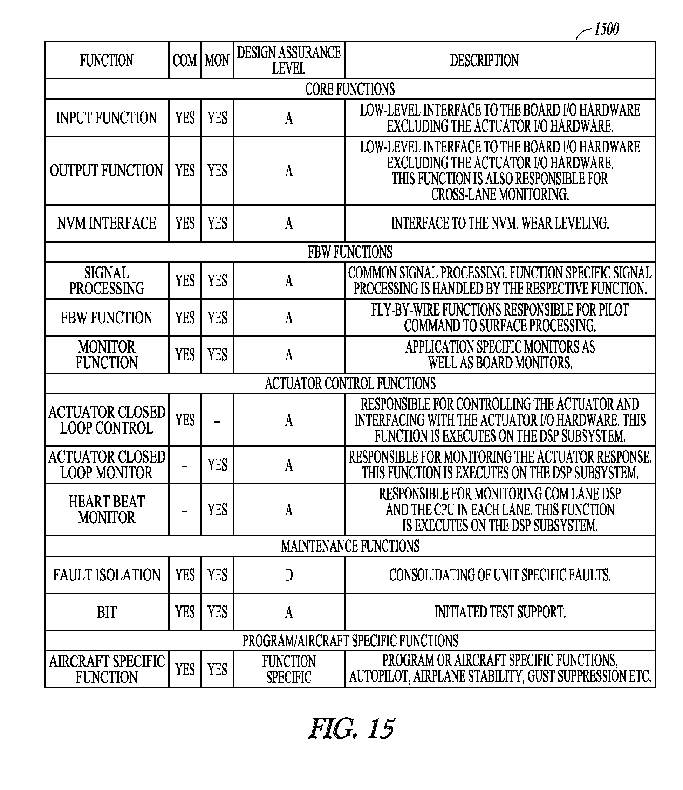

The actual functionality is implemented as a set of software functions. The time and space partitioning features allow to use different design assurance level for the software functions. A top level list of the software functions is provided in table 1500 in FIG. 15.

The DC software design follows the DACU unit software design as far as the core functions are concerned. The primary function of the DC unit is to act as a gateway between the internal FBW bus and the aircraft data networks. The unit receives data from the aircraft data networks, performs any necessary data voting and outputs the data to the internal FBW bus. In the opposite direction the unit receives the data from the internal FBW bus, performs data consolidation and outputs the data to the aircraft data networks. The output of the data in either direction is synchronized between lanes.

The DC unit also hosts maintenance functions for interfacing with the aircraft maintenance system, fault consolidation and coordination of BIT functions involving multiple DACU.

In some embodiments, the D-FBW enables a quick adaptation of the D-FBW system to different aircrafts as well as to limit the cost of the adaptation. In order to support this goal the software design relies on the following features to be used during the software development phase: Usage of parameterized generic functions (e.g. filters, monitors) implemented in software libraries; Extended usage of S-functions for the model based part of the software development; and Binary reuse of software components and libraries.

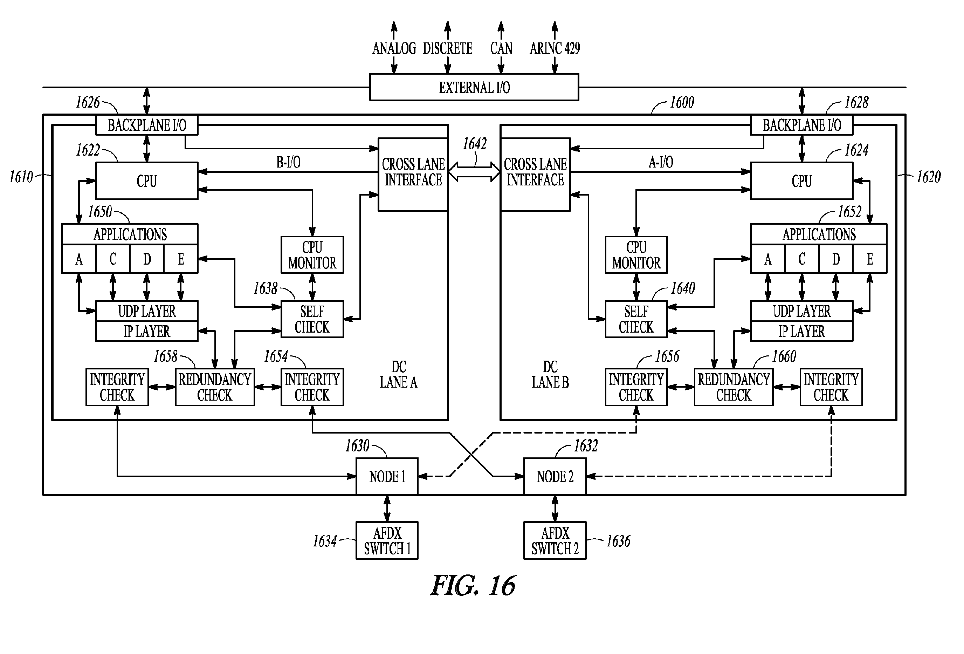

FIG. 16 is a block diagram example of the dual DC lanes IO function illustrating the DC software design FBW Bus Architecture and DC HW Architecture. A data concentrator (DC) 1600 is a gateway between the external aircraft units on the aircraft data networks and the D-FBW units that allows to access data on the D-FBW bus for use by various units. The D-FBW bus is based on ARINC 664 standard which allows to develop flight critical D-FBW system using Avionics Full Duplex Switched Ethernet (AFDX) network that provides direct connectivity between the DC and DACU's. The DC is a dual lane unit which can operate as a single lane unit if one lane is un-powered or unavailable. Each two DC lanes 1610 and 1620 are powered from separate power supplies and have two separate processors 1622, 1624 and separate receiver circuits 1626, 1628 to provide redundant reception of all inputs from the external systems. The voted inputs will be deported to DC nodes 1630, 1632 and will be transmitted among AFDX switches 1634, 1636 to the D-FBW bus. The DC 1600 contains shared nodes which are connected to the AFDX switches. The dual lane configuration allows the DC to implement self checking 1638, 1640 through an internal cross lane interface 1642. Thus high integrity data propagation is possible via nodes. Physical DC separation is used to segregate I/O to support FBW system.

The DC 1600 provides management for transfer of different types of dedicated inputs and outputs to and from the D-FBW bus. In addition, the DC 1600 provides computational environment such as data voting/validation from the external aircraft units, external protocol handlers, data consolidation from the internal D-FBW bus and various maintenance operations. The computational environment is divided into different levels of critically. Therefore the DC allows multiple applications which can be separated based on the flight critical functions.

The DC 1600 uses an open system environment that enables an independent external supplier to implement their systems/functions on the D-FBW. The key open standards utilized are ARINC 429, CAN and other analog/digital inputs. Utilization of a new system into FBW does not impact the existing D-FBW functionality.

Various embodiments of the DC may provide one or more of the following services. Service to allow to receive the system analog and serial digital interfaces, service to support functional processing needs, distributed system bus to support communication between DACU's, and data loading and monitoring functions for AFDX switches.

The DC provides the high performance computation of the control functions that provide maximum availability and fault tolerance since software faults can be common mode faults. It is achieved by independent redundant dual lane architecture. For maximum error coverage in each DC lane, the CPU monitor self check provides error detection and pulls the CPU offline if an error is detected, thus any failure of a single lane can not impact both D-FBW buses. In addition, the redundancy on the D-FBW bus will be available even if there is a failure in one DC lane. Only one DC lane operates the shared nodes and outputs messages to the AFDX switches. The following applications 1650, 1652 may be hosted on both DC lanes.
Level A the Voter Applications:
   Analog I/O Voter
   Discrete I/O Voter
   CAN Bus IO Voter
   ARINC 429 IO Voter
   ARINC 664 Core
   IP /UDP header, checksum
Level C Applications:
   Status Generation
   NVM Memory Management
   Port Handlers Controllers
Level D (E) Maintenance Applications:
   Continuous BITE
   CMS interface - Command/Response
   Configuration Management
   Fault Reporting
   Fault Isolation

The DC 1600 implements the integrity checking of the received redundant data from the D-FBW prior to forwarding them into the appropriate application 1650, 1652. If the message is corrupted, an integrity checker 1654, 1656 is capable of discarding the received message. The integrity checker is allowed also in transmitting mode.

In one embodiment, two frame delivered messages are evaluated via integrity checker 1658, 1660. Duplicate messages are discarded, and only one copy of each message is forwarded to the DC application. The redundancy checker 1658, 1660 checks maximum allowed time between two messages, which is defined for each virtual link specified below. To support the redundancy the D-FBW network consists of two redundant buses, named as D-FBW bus 1 and D-FBW bus 2.

The DC 1600 implements the D-FBW bus by allowing the packets or frames to take different paths through an AFDX switch according to their intended destination. This makes the D-FBW bus, along with the traffic policy, deterministic and reliable. The D-FBW bus is parallel redundant that allows increased robustness and provide higher level of fault tolerance. The data flows are protected against the failure of any D-FBW bus component such as link or a switch failure. Each DACU has two ports which are connected to two independent D-FBW buses. The DC node 1 is connected to the D-FBW bus 1 (black) and DC node 2 is connected to the D-FBW bus 2. The DC node A and node B and all DACU's are connected to a switch port via a twisted pair wires.

The ARINC 664/AFDX is developed to provide an efficient data distribution system which may result in a reduction of wiring. The wiring reduction is also based on FBW system complexity and localization of units in airplane. Therefore to minimize the D-FBW bus wiring on the aircraft the current system architecture contains two proposals how to distribute DACU's around an airplane; all DACU's are located in the fuselage or DACU's are integrated as microcontrollers directly in the actuators or close to the actuators.

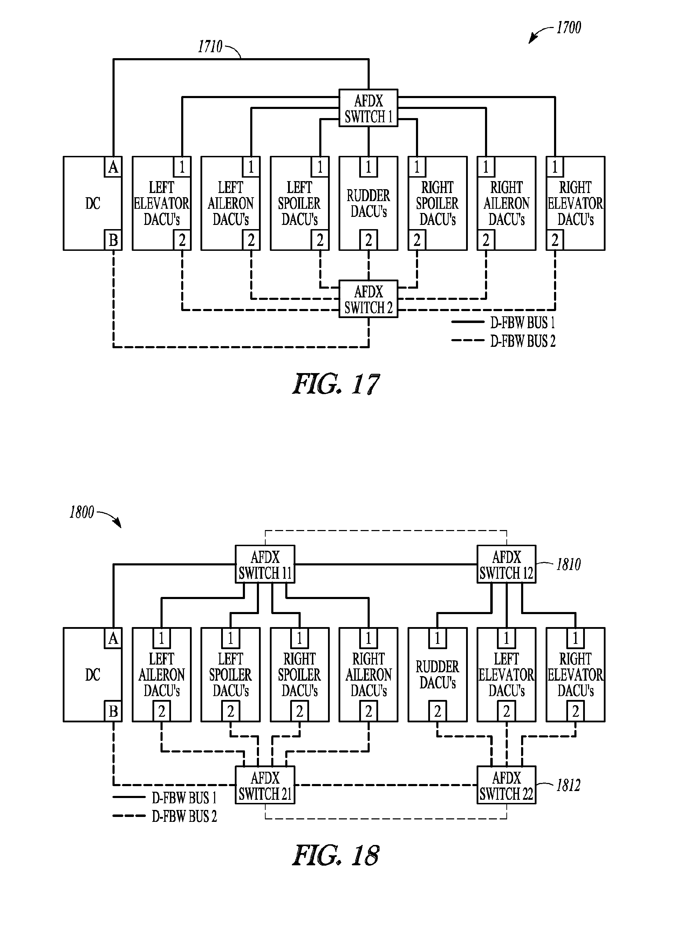

The physical links between DC, AFDX switch and DACU's while all control units are located in the fuselage is illustrated in FIG. 17 in block schematic form at 1700.

The length of the D-FBW bus wiring 1710 (D-FBW bus 1 wiring) and 1720 (D-FBW bus 2 wiring) is minimal while all units are located in the fuselage. The wiring from the DACU's to the actuators will be maximal as shown in block schematic form in FIG. 18 at 1800. To decrease the length of the wiring to the actuators, DACU's are localized close to the actuators. Since the ARINC 664 bus uses a twisted pair wire cables as the physical link, moving the AFDX switches and the DACU's closer to the actuators will decrease the wiring along with the wiring weight. The maximum effect will be achieved when two AFDX switches 1810 and 1812 are added at the end of the aircraft fuselage to handle the elevator and rudder actuators. The physical links between DC, AFDX switch and the actuators while each actuator hosts DACU unit as microcontroller or DACU's are localized closer to the actuators.

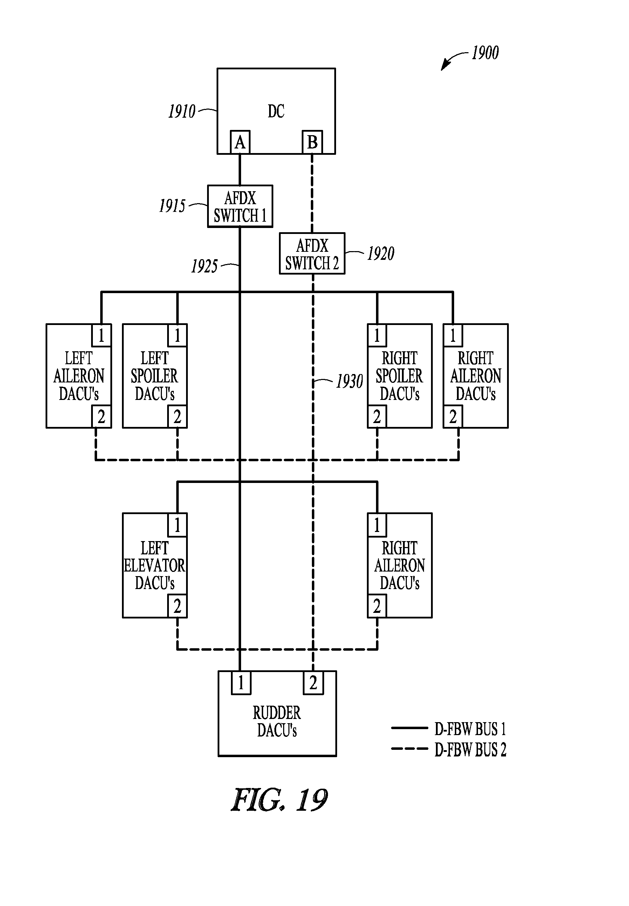

Logical DC- DACU's links in fuselage are shown in block schematic form at 1900 in FIG. 19 with all control units located in the fuselage. The data from the DC 1910 through AFDX switches 1915 and 1920 are sent across both D-FBW buses 1925, 1930 simultaneously, the redundancy management on each unit ensures that only data from one D-FBW bus are consumed and sequential order is maintained. Due to this fact, AFDX switches are used within the FBW network to provide the MAC layer routing function between each units connected to the D-FBW bus. The FBW network is arranged as a set of DACU's connecting each node on the D-FBW bus to the full duplex switch schema.

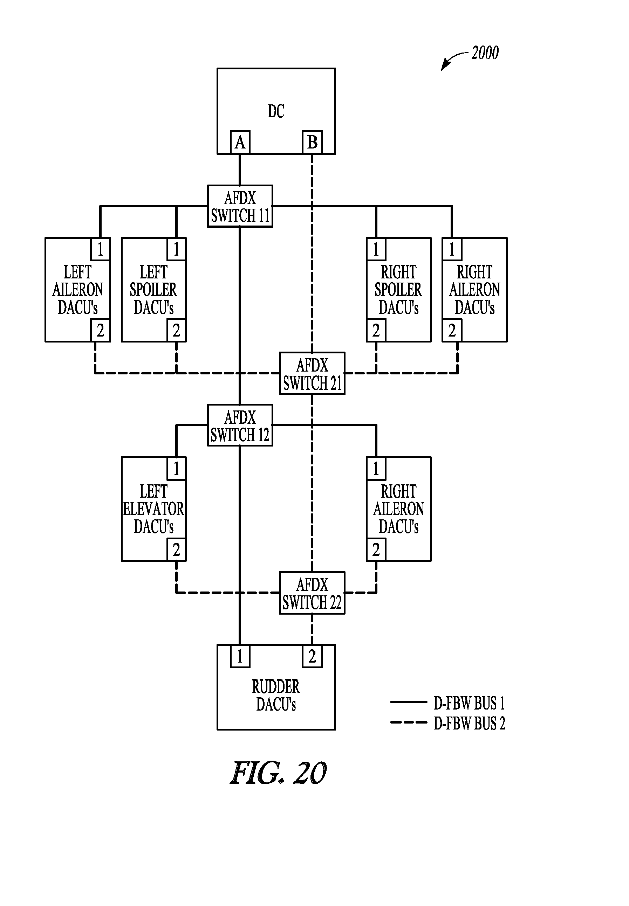

The logical D-FBW bus architecture when each actuator hosts DACU unit as a microcontroller which is placed in the actuator unit (or the DACU's are localized closer to the actuators) is illustrated in block schematic form at 2000 in FIG. 20.

The primary function of the AFDX switch is to validate addresses and route data to the correct switch port. This is done using configuration table which is configured during initialization and remains static during operation. The AFDX switch establishes physical links to all DACU's and to the DC. The configuration table defines which incoming data from the DC or any DACU unit will be forwarded to which unit connected to the D-FBW.

Since the AFDX is based on Ethernet standard in one embodiment, which is not a deterministic network, the D-FBW bus architecture ensures a deterministic behavior. This is done through logical virtual links (VL), defined in a configuration table, which behave like separate physical links but all of them use just one physical link. This approach establishes a sophisticated D-FBW bus which ensures deterministic behavior through VL bandwidth management. Each VL is allocated communication path bandwidth.

The D-FBW bus has two independent paths between each unit within FBW. For each VL the DC sends a copy of the data to both D-FBW buses (D-FBW bus 1 - blue and D-FBW bus 2 - black). The receiving unit accepts only the first instance of the data and discards the other copy. The DC is sourcing all inputs from the external aircraft units on the D-FBW. The VL therefore is configured for redundancy within configuration table to transmit the same data on both D-FBW buses. Therefore each VL has the computed bandwidth as a function of the bandwidth allocation gap that regulates the rate allowed for transmitting on the VL on the D-FBW bus and the maximum message size. The maximum bandwidth is computed by multiplying the bandwidth allocation gap and the maximum message size. The time resources which are needed for the D-FBW bus are known ahead of time so the DC is capable of handling the traffic load between the DC and the AFDX switches. The traffic between the AFDX switches and DACU's is handled by switches since switch will discard all the traffic which does not belong to the appropriate DACU.

The latency within D-FBW bus is based on the final FBW architecture. The time for delivery of a VL message is constant. The total latency can be calculated as a function of latency of message delivery through the DC - AFDX Switch (D-FBW bus), message timing and latency of delivery through the DACU receiver. The standard latency is defined for AFDX switch to be 100 µs and for DC and DACU's 150 µs. To increase the D-FBW bus bandwidth leads to reducing the VL.

The D-FBW bus addressing is based upon the MAC address of each unit within the FBW. The MAC address is 16 bits long. The source address is a unicast and includes bits for identifying to which of the two redundant buses the MAC is attached. The destination address is a multicast that includes a 16 bit identifier.

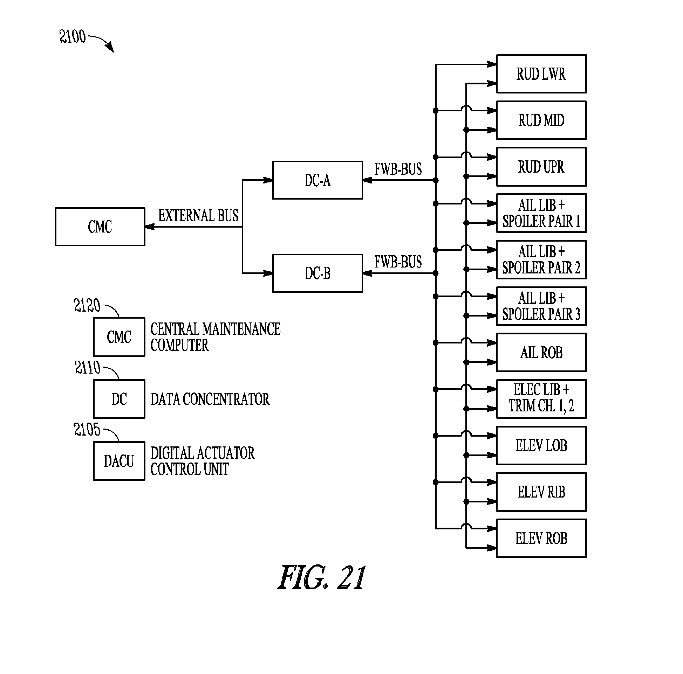

Maintenance Operations - This section describes a maintenance system 2100 for the fly-by-wire systems as illustrated in block form in FIG. 21. The maintenance system 2100 in general provides the functions necessary for flight controls system rigging, compatibility checks, fault detection, fault isolation, fault reporting and fault repair verification. The maintenance system in one embodiment consists of Maintenance Functions residing in each Digital Actuator Control Unit 2105 (DACU) and Maintenance Controller residing in the Data Concentrator Unit 2110.

Maintenance Overview - The maintenance system 2100 is responsible for monitoring the health status of the system. Under normal circumstances, no external and/or additional test equipment will be required to perform maintenance operations. On unit power-up the maintenance systems continuous monitoring functions will be operative and upon fault detection, the system consolidates and isolates the fault producing a fault report. The maintenance system will be capable of fault storage to prevent fault to be cleared during power off. Failures which affect the flight crew's ability to control the airplane or cause a change in the operational procedures will be annunciated on an EICAS display. The maintenance system will be also responsible for initiating and reporting results of built-in tests. The maintenance system will provide D-FBW systems compatibility checks upon power-up and report equipment configuration information.

System Overview - The Maintenance controller residing in Data Concentrator unit 2110 will be responsible for interfacing with a Central Maintenance Computer (CMC) 2120. The Maintenance controller will handle fault reporting, initiated built-in test management and coordination between the CMC 2120 and maintenance functions residing in each DACU 2105. An example of the overall communication between the maintenance controller (DC) 2110 and the maintenance functions (DACU) to the CMC is shown in FIG. 21.

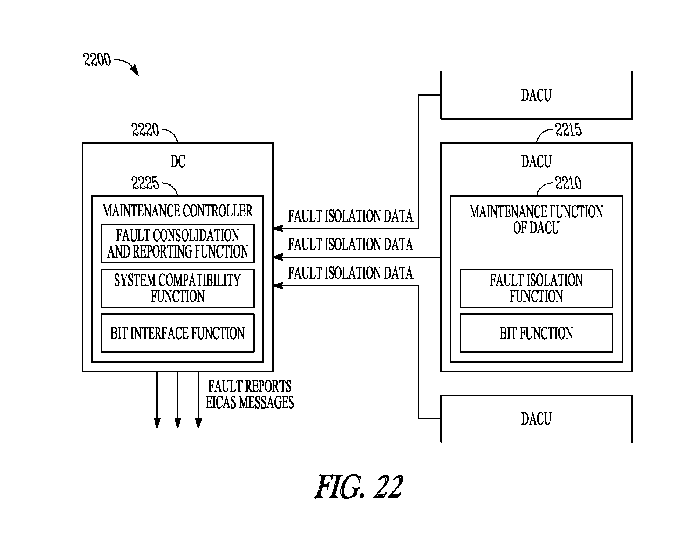

Functional Overview - Fault Detection, Isolation and Reporting. Under normal operation, the maintenance system continuously listens to the self monitoring functions of all system members and when a fault is detected by the system member then the responsible monitor with associated failed system signal variables is isolated by the member system maintenance function for fault processing as illustrated generally at 2200 in FIG. 22. The respective maintenance function 2210 in each DACU 2215 detects faults and sends results to the maintenance controller for fault consolidation and fault reporting.

The maintenance system is an observer based system depending on the functional groups for fault detection. Digital Actuation Control Units 2215 detect and isolate internal faults of DACU to Data Concentrator Unit 2220. Data Concentrator Unit 2220 detects and isolates communication and wiring faults. A Maintenance Controller 2225 of DC then consolidates and classifies communication faults between DACUs and DACU internal faults to prevent ambiguous or false faults being reported.

The Maintenance controller 2225 processes and reports all the detected faults and associated sensor values. Fault indicators are displayed through the maintenance system CMCF and EICAS. For each reported fault, there is a unique maintenance action.

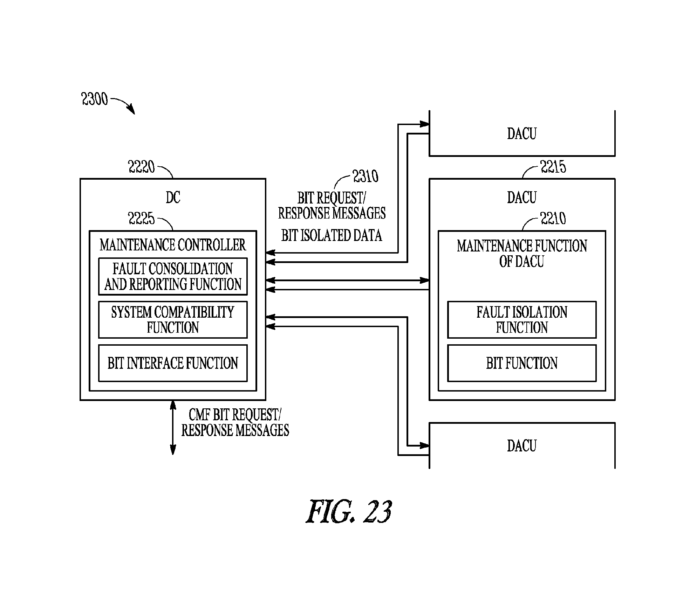

Each DACU is capable to latch detected faults and store latch states in non-volatile memory as illustrated at 2300 in FIG. 23. To clear these faults ground maintenance actions may be performed. The maintenance system will be capable of the following tests, PBIT - startup and periodic built-in test, and IBIT - initiated built-in test.

The BIT functions residing in each DACU will handle periodic and start-up BIT operations. The BIT functions residing in each DACU will be also responsible for initiated BIT operations and these will be controlled by CMCF through BIT interface function as a part of the maintenance controller via request/response messages coming to/from DC/DACUs. All BIT results 2310 will be reported by each DACU to Maintenance controller as BIT isolated data for further processing.

The periodic built-in tests are performed in intervals of flight hours. PBIT tests will be derived from safety requirements. The initiated built-in tests are capable of isolating faults for the functional groups and if no failures are detected during testing then latches pertaining to the tests are reset and a return to service report is issued. Both PBIT and IBIT are not required to be performed during flight. These are to be performed when test-to-test specific set of conditions is satisfied.

The system is very flexible in equipment configuration therefore the system configuration and compatibility checks play a key role. It ensures that all available components are compatible and send valid commands. Once any DACU is powered, PBIT function reports DACU configuration to DC, where system compatibility function provides checks and reports status. The following incompatibility fault reports are provided - hardware/software DACU incompatibility, and cross unit incompatibility.

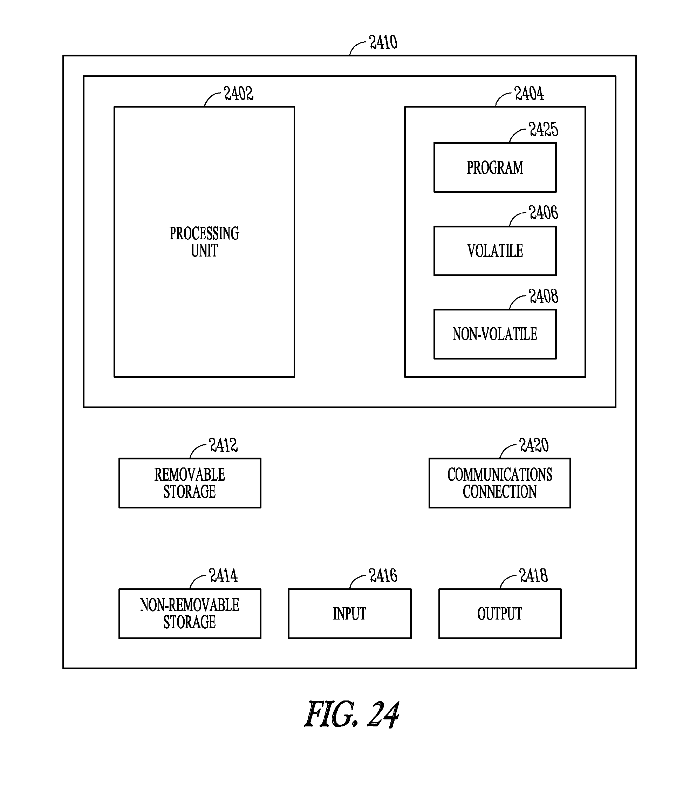

A block diagram of a computer system or microcontroller that executes programming for performing the above algorithm is shown in FIG. 24. For microcontroller implementations, several components described may not be needed, such as displays, some storage devices, and user I/O devices. A general computing device in the form of a computer 2410, may include a processing unit 2402, memory 2404, removable storage 2412, and non-removable storage 2414. Memory 2404 may include volatile memory 2406 and non-volatile memory 2408. Computer 2410 may include - or have access to a computing environment that includes - a variety of computer-readable media, such as volatile memory 2406 and non-volatile memory 2408, removable storage 2412 and non-removable storage 2414. Computer storage includes random access memory (RAM), read only memory (ROM), erasable programmable read-only memory (EPROM) & electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices, or any other medium capable of storing computer-readable instructions. Computer 2410 may include or have access to a computing environment that includes input 2416, output 2418, and a communication connection 2420. The computer may operate in a networked environment using a communication connection to connect to one or more remote computers. The remote computer may include a personal computer (PC), server, router, network PC, a peer device or other common network node, or the like. The communication connection may include a Local Area Network (LAN), a Wide Area Network (WAN) or other networks.

Computer-readable instructions to execute methods and algorithms described above may be stored on a computer-readable medium such as illustrated at a program storage device 2425 are executable by the processing unit 2402 of the computer 2410. A hard drive, CD-ROM, and RAM are some examples of articles including a computer-readable medium.

Some of the abbreviations and acronyms used herein are set forth for convenience:

| **Acronym** | **Definition** |
|---|---|
| A664 | ARINC 664 bus |
| A664 ES | A664 End System |
| AA/AS | Active-Active/Active-Standby (Mode) |
| ADC | Analog to Digital Convertor |
| ARINC | Aeronautical Radio, Incorporated |
| ARP | Aerospace Recommended Practice |
| BIT | Built-In Test |
| CAN | Controller-area network |
| CBIT | Continues Built-In Test |
| CCPS | Cockpit Control Position Signal |
| CMC | Central Maintenance Computer |
| COM Lane | Command Lane |
| DAC | Digital to Analog Convertor |
| DACU | Digital Actuator Control Unit |
| D-FBW | Distributed Fly-by-Wire |
| DSP | Digital Signal Processing |
| EFIS | Electronic Flight Instrument System |
| EICAS | Engine Indications and Crew Alerting System |
| FAR | Federal Aviation Regulation |
| FBW-Bus | Fly By Wire Bus |
| FESI | Foreign Engage Status Interlock |
| FFA | Full Force Fight Authority |
| FFI | Force Fight Interlock |
| FHA | Failure Hazard Assessment |
| FPGA | Field-Programmable Gate Array |

## Claims

1. A system (100) comprising:
a plurality of fly-by-wire control units (110) to control flight control surfaces (405, 410, 415, 420, 425) of an airplane (200), wherein each control unit (110) is adapted to operate independently of other control units and directly control an actuator (215) to control a control surface as a function of direct pilot control device (430, 435) input.

2. The system of claim 1 wherein each control unit (110) is adapted to perform safety monitoring without input from other control units.

3. The system of claim 1 wherein each control unit (110) is adapted to operate in a failure mode and process pilot control device input and perform safety monitoring without input from other control units.

4. The system of claim 1 wherein each control unit (110) includes digital closed loop functionality (1110) to control an actuator (215).

5. The system of claim 1 wherein the control units (110) are adapted to reside separate from the actuators (215) or directly coupled to the actuators (215).

6. A control unit (110, 1300) comprising:
an input (1310) to couple directly to pilot control device (430, 435) input;
an output (1330) to couple directly to an actuator to control a flight control surface (405, 410, 415, 420, 425); and
a processor (1322, 1324) coupled to the input and to the output to directly control the flight control surface (405, 410, 415, 420, 425) via the actuator, while complying with predetermined control laws and safety monitoring independently performed by the processor, as a direct function of pilot control device input (430, 435).

7. The control unit of claim 6 wherein the control unit (110, 1300) is adapted to perform safety monitoring without input from other control units.

8. The control unit of claim 6 wherein the control unit (110, 1300) is adapted to control its corresponding control surface with safety without input from other control units.

9. The control unit of claim 6 wherein the control unit (110, 1300) is adapted to operate in a failure mode and process pilot control device input and perform safety monitoring without input from other control units.

10. A computer implemented method comprising:
while operating in a normal mode:
receiving input from multiple control units (110, 1300) and external systems via a fly-by-wire bus (1332);
receiving input from a pilot control device (430, 435);
executing control laws;
executing safety monitoring; and
controlling a flight surface (405, 410, 415, 420, 425) via a directly coupled actuator (215); and
while operating in a failure mode:
exclusively receiving input from a directly coupled pilot control device (430, 435);
executing control laws independent from other control units (110, 1300) and external systems;
executing safety monitoring independent from other control units (110, 1300); and
controlling a flight (405, 410, 415, 420, 425) surface via a directly coupled actuator (215).
